# EUROPEAN PATENT APPLICATION

(11) **EP 4 523 550 A1**
(43) Date of publication of application: **19.03.2025**
(21) Application number: 23803229.6
(22) Date of filing: 10.03.2023
(51) Int. Cl.: A24B 15/32, A24B 15/26

(54) **METHOD FOR ISOLATING AND PURIFYING NEOPHYTADIENE FROM LEAF TOBACCO, NEOPHYTADIENE COMPOSITION, NON-COMBUSTION HEATING-TYPE FLAVOR INHALER, NON-COMBUSTION NON-HEATING TYPE FLAVOR INHALER, COMBUSTION-TYPE FLAVOR INHALER AND METHODS FOR PRODUCING SAME**

(30) Priority: 13.05.2022 JP 2022079245
(71) Applicant: Japan Tobacco Inc., Tokyo 105-6927 (JP)
(72) Inventor: TSURUOKA, Naoya, Tokyo 130-8603 (JP); CHIDA, Masahiro, Tokyo 130-8603 (JP); MIZUTANI, Masashi, Tokyo 130-8603 (JP)
(74) Representative: Hoffmann Eitle
(86) International application number: PCT/JP2023/009210
(87) International publication number: WO 2023/218745

(57) **Abstract**

The present invention provides a method that makes it possible to isolate and purify neophytadiene from leaf tobacco with high yield and high purity. The method comprises: a step for adding an aprotic solvent to leaf tobacco to perform an extraction operation and removing extraction residue to obtain an extraction liquid (A1); a step for adding an acidic aqueous solution to the extraction liquid (A1) to perform liquid-liquid extraction, and removing an aqueous layer to obtain an extraction liquid (B1); a step for adding a protic solvent to the extraction liquid (B1) to perform liquid-liquid extraction, and removing a protic solvent layer to obtain an extraction liquid (C1); a step for removing a solvent from the extraction liquid (C1) to obtain dried matter (D1); a step for adding a protic solvent to the dried matter (D1) to obtain a solution (E1); a step for removing precipitate produced in the solution (E1) to obtain a supernatant liquid (F1); a step for replacing the solvent in the supernatant liquid (F1) with an aprotic solvent to obtain a solution (G1); and a step for isolating and purifying neophytadiene from the solution (G1) via normal phase HPLC.

## Description

### TECHNICAL FIELD

The present invention relates to a method of performing isolated purification of neophytadiene from leaf tobacco, a neophytadiene composition, a non-combustion-heating-type flavor inhaler, a non-combustion-non-heating-type flavor inhaler, a combustion-type flavor inhaler, and manufacturing methods therefor.

### BACKGROUND ART

Neophytadiene is a terpenoid compound contained in leaf tobacco and correlates with a characteristic aroma of a tobacco plant, so it is focused as an important component to develop aroma quality. Although it is known that an essential oil containing neophytadiene has an anti-inflammatory action (NPL 1), it is made clear in recent years that neophytadiene simple substance exercises an anti-inflammatory action, so it is focused (NPL 2).

As a substance containing neophytadiene, algae are known among plant bodies (NPL 2). Neophytadiene reportedly derives from phytol obtained by liberating part of chlorophylls a, b contained in a plant through hydrolysis in lumens, and it is also reported that neophytadiene is detected from milk and beef of cows for which grass containing neophytadiene is used as feed (NPL 3).

A synthetic reaction is mainly used as a method of obtaining a simple substance of neophytadiene. In the synthetic reaction, initially chlorophyll is subjected to hydrolysis under alkaline condition to produce phytol. Concentrated sulfuric acid is added to the produced phytol and heated at 170°C to cause an elimination reaction, with the result that neophytadiene is produced (PTL 1).

On the other hand, in a case where neophytadiene is separated from a mixture, such as a plant body, neophytadiene is purified as essential oil containing another material, and there are a small number of reports on isolated purification of neophytadiene simple substance. For example, NPL 4 describes a method in which, as a process of performing isolated purification of neophytadiene from tobacco, extraction is performed with a hexane solvent from tobacco of a flue cured type, then a hexane layer is dissolved by using a silicic acid column chromatography, the solvent is replaced with acetone, saturated hydrocarbons are crystallized and removed, and then elution is performed with an alumina chromatography.

### CITATION LIST

### PATENT LITERATURE

PTL 1: Japanese Unexamined Patent Application Publication (Translation of PCT Application) No. 2012-529893

### NON PATENT LITERATURE

NPL 1: Adeosun TE, Ogunwande IA, Avoseh ON, Raji IP, Lawal OA. Composition and Anti-inflammatory Activity of Essential Oil of Jatropha curcas. Nat Prod Commun. 2017 Mar; 12(3): 439-440. PMID: 30549905.
NPL 2: Bhardwaj, M., Sali, V.K., Mani, S. et al. Neophytadiene from Turbinaria ornata Suppresses LPS-Induced Inflammatory Response in RAW 264.7 Macrophages and Sprague Dawley Rats. Inflammation 43, 937-950 (2020)
NPL 3: Study on Establishment of Traceability Using the Characteristics of Volatile Components in Milk Produced by Grazing Breeding and Milk Volatile Components as Markers, Yasuko UEDA, Hokkaido University, Doctor (Agriculture), Otsu 6987 (2016)
NPL 4: Flue-cured Tobacco. II. Neophytadiene

### SUMMARY OF INVENTION

### TECHNICAL PROBLEM

However, with the method described in NPL 4, it is not possible to perform isolated purification of neophytadiene in high yield and high purity. In consideration of expansion of effective use of neophytadiene, it is desired to develop a method capable of performing isolated purification of neophytadiene from leaf tobacco with high yield and high purity.

It is an object of the present invention to provide a method capable of performing isolated purification of neophytadiene from leaf tobacco with high yield and high purity, a neophytadiene composition obtained with the method, and a non-combustion-heating-type flavor inhaler, a non-combustion-non-heating-type flavor inhaler, and a combustion-type flavor inhaler that include the neophytadiene composition.

### SOLUTION TO PROBLEM

The present invention includes the following embodiments.
[1] A method of performing isolated purification of neophytadiene from leaf tobacco, the method including:
   a step of obtaining an extract (A1) by adding an aprotic solvent to the leaf tobacco to perform extraction operation and then removing an extraction residue;
   a step of obtaining an extract (B1) by adding an acidic aqueous solution to the extract (A1) to perform liquid-liquid extraction and then removing an aqueous layer;
   a step of obtaining an extract (C1) by adding a protic solvent to the extract (B1) to perform liquid-liquid extraction and then removing a layer of a protic solvent;
   a step of obtaining a dry solid (D1) by removing a solvent of the extract (C1);
   a step of obtaining a solution (E1) by adding a protic solvent to the dry solid (D1) to dissolve the dry solid (D1);
   a step of obtaining a supernatant (F1) by removing a deposit produced in the solution (E1);
   a step of obtaining a solution (G1) by replacing a solvent of the supernatant (F1) with an aprotic solvent; and
   a step of performing isolated purification of neophytadiene from the solution (G1) through normal phase high performance liquid chromatography.
[2] A method of performing isolated purification of neophytadiene from leaf tobacco, the method including:
   a step of obtaining an extract (A2) by adding an aprotic solvent to the leaf tobacco to perform extraction operation and then removing an extraction residue;
   a step of obtaining an extract (B2) by adding an acidic aqueous solution to the extract (A2) to perform liquid-liquid extraction and then removing an aqueous layer;
   a step of obtaining a dry solid (C2) by removing a solvent of the extract (B2);
   a step of obtaining a solution (D2) by adding a protic solvent to the dry solid (C2) to dissolve the dry solid (C2);
   a step of obtaining a supernatant (E2) by removing a deposit produced in the solution (D2);
   a step of obtaining a solution (F2) by adding an aprotic solvent to the supernatant (E2) to perform liquid-liquid extraction and then removing a layer of a protic solvent; and
   a step of performing isolated purification of neophytadiene from the solution (F2) through normal phase high performance liquid chromatography.
[3] The method according to [1] or [2], wherein pH of the acidic aqueous solution is less than or equal to three.
[4] The method according to any one of [1] to [3], wherein the aprotic solvent is at least one solvent selected from the group consisting of hexane, heptane, and ethyl acetate.
[5] The method according to any one of [1] to [4], wherein the protic solvent is methanol.
[6] The method according to any one of [1] to [5], wherein the leaf tobacco is at least one of a flue cured type and a burley type.
[7] The method according to [1], wherein the step of obtaining the solution (G1) is a step of obtaining the solution (G1) by adding an aprotic solvent to the supernatant (F1) to perform liquid-liquid extraction and then removing a layer of a protic solvent.
[8] The method according to [1], wherein the step of obtaining the solution (G1) is a step of, after a solvent of the supernatant (F1) is removed, obtaining the solution (G1) by adding an aprotic solvent.
[9] The method according to any one of [1] to [8], wherein a neophytadiene composition obtained through the isolated purification contains 95mass% or higher of neophytadiene.
[10] A manufacturing method for a non-combustion-heating-type flavor inhaler, the manufacturing method including:
   a step of obtaining a neophytadiene composition by performing isolated purification of neophytadiene from leaf tobacco with the method according to any one of [1] to [9];
   a step of adding the neophytadiene composition to a substrate; and
   a step of manufacturing a non-combustion-heating-type flavor inhaler including the substrate.
[11] A manufacturing method for a non-combustion-non-heating-type flavor inhaler, the manufacturing method including:
   a step of obtaining a neophytadiene composition by performing isolated purification of neophytadiene from leaf tobacco with the method according to any one of [1] to [9];
   a step of adding the neophytadiene composition to a substrate; and
   a step of manufacturing a non-combustion-non-heating-type flavor inhaler including the substrate.
[12] A manufacturing method for a combustion-type flavor inhaler, the manufacturing method including:
   a step of obtaining a neophytadiene composition by performing isolated purification of neophytadiene from leaf tobacco with the method according to any one of [1] to [9];
   a step of adding the neophytadiene composition to a substrate; and
   a step of manufacturing a combustion-type flavor inhaler including the substrate.
[13] A neophytadiene composition containing 95mass% or higher of neophytadiene, the neophytadiene composition being obtained by performing isolated purification of neophytadiene from leaf tobacco with the method according to any one of [1] to [9].
[14] A non-combustion-heating-type flavor inhaler including the neophytadiene composition according to [13].
[15] A non-combustion-non-heating-type flavor inhaler including the neophytadiene composition according to [13].
[16] A combustion-type flavor inhaler including the neophytadiene composition according to [13].

### ADVANTAGEOUS EFFECTS OF INVENTION

According to the present invention, it is possible to provide a method capable of performing isolated purification of neophytadiene from leaf tobacco with high yield and high purity, a neophytadiene composition obtained with the method, and a non-combustion-heating-type flavor inhaler, a non-combustion-non-heating-type flavor inhaler, and a combustion-type flavor inhaler that include the neophytadiene composition.

### BRIEF DESCRIPTION OF DRAWINGS

[Fig. 1] Fig. 1 is a flowchart that shows an example of a method according to a first embodiment of the present invention.
[Fig. 2] Fig. 2 is a flowchart that shows an example of a method according to a second embodiment of the present invention.
[Fig. 3] Fig. 3 is a schematic diagram that shows an example of a non-combustion-heating-type flavor inhaler according to the present embodiment.
[Fig. 4] Fig. 4 is a schematic diagram that shows an example of a non-combustion-heating-type flavor inhaling system according to the present embodiment.
[Fig. 5] Fig. 5 is a schematic diagram that shows an example of a non-combustion-non-heating-type flavor inhaler according to the present embodiment.
[Fig. 6] Fig. 6 is a schematic diagram that shows an example of a tobacco capsule of the non-combustion-non-heating-type flavor inhaler according to the present embodiment.
[Fig. 7] Fig. 7 is a schematic diagram that shows an example of a power supply unit of the non-combustion-non-heating-type flavor inhaler according to the present embodiment.
[Fig. 8] Fig. 8 is a schematic diagram that shows an example of a cartridge of the non-combustion-non-heating-type flavor inhaler according to the present embodiment.
[Fig. 9] Fig. 9 is a schematic diagram that shows an example of the cartridge of the non-combustion-non-heating-type flavor inhaler according to the present embodiment.
[Fig. 10] Fig. 10 is a schematic diagram that shows an example of a combustion-type flavor inhaler according to the present embodiment.
[Fig. 11] Fig. 11 is a total ion chromatogram obtained through an analysis with GC/MS of an n-hexane solution in Reference Example 2.
[Fig. 12] Fig. 12 is a total ion chromatogram obtained through an analysis with GC/MS of an ethyl acetate solution in Reference Example 2.
[Fig. 13] Fig. 13 is a total ion chromatogram obtained through an analysis with GC/MS of an ethanol solution in Reference Example 2.
[Fig. 14] Fig. 14 is a total ion chromatogram obtained through an analysis with GC/MS of a methanol solution in Reference Example 2.
[Fig. 15] Fig. 15 is a total ion chromatogram obtained through a GC/MS analysis of a solution obtained in step B1 of Example 1.
[Fig. 16] Fig. 16 is a total ion chromatogram obtained through a GC/MS analysis of a hexane solution obtained in step C1 of Example 1.
[Fig. 17] Fig. 17 is a total ion chromatogram obtained through a GC/MS analysis of a methanol solution obtained in step C1 of Example 1.
[Fig. 18] Fig. 18 is a total ion chromatogram obtained through a GC/MS analysis of a supernatant solution obtained in step F1 of Example 1.
[Fig. 19] Fig. 19 is a chromatogram obtained by fractioning neophytadiene by HPLC in step H1 of Example 1.
[Fig. 20] Fig. 20 is a total ion chromatogram obtained through a GC/MS analysis of a solution of a neophytadiene composition obtained in Example 1.

### DESCRIPTION OF EMBODIMENTS

### [Method of Performing Isolated Purification of Neophytadiene from Leaf Tobacco]

### <First Embodiment>

A method of performing isolated purification of neophytadiene from leaf tobacco according to the present embodiment includes the following steps:
a step of obtaining an extract (A1) by adding an aprotic solvent to leaf tobacco to perform extraction operation and then removing an extraction residue (hereinafter, also referred to as step A1);
a step of obtaining an extract (B1) by adding an acidic aqueous solution to the extract (A1) to perform liquid-liquid extraction and then removing an aqueous layer (hereinafter, also referred to as step B1);
a step of obtaining an extract (C1) by adding a protic solvent to the extract (B1) to perform liquid-liquid extraction and then removing a layer of a protic solvent (hereinafter, also referred to as step C1);
a step of obtaining a dry solid (D1) by removing a solvent of the extract (C1) (hereinafter, also referred to as step D1);
a step of obtaining a solution (E1) by adding a protic solvent to the dry solid (D1) to dissolve the dry solid (D1) (hereinafter, also referred to as step E1);
a step of obtaining a supernatant (F1) by removing a deposit produced in the solution (E1) (hereinafter, also referred to as step F1);
a step of obtaining a solution (G1) by replacing a solvent of the supernatant (F1) with an aprotic solvent (hereinafter, also referred to as step G1); and
a step of performing isolated purification of neophytadiene from the solution (G1) through normal phase high performance liquid chromatography (hereinafter, also referred to as step H1).

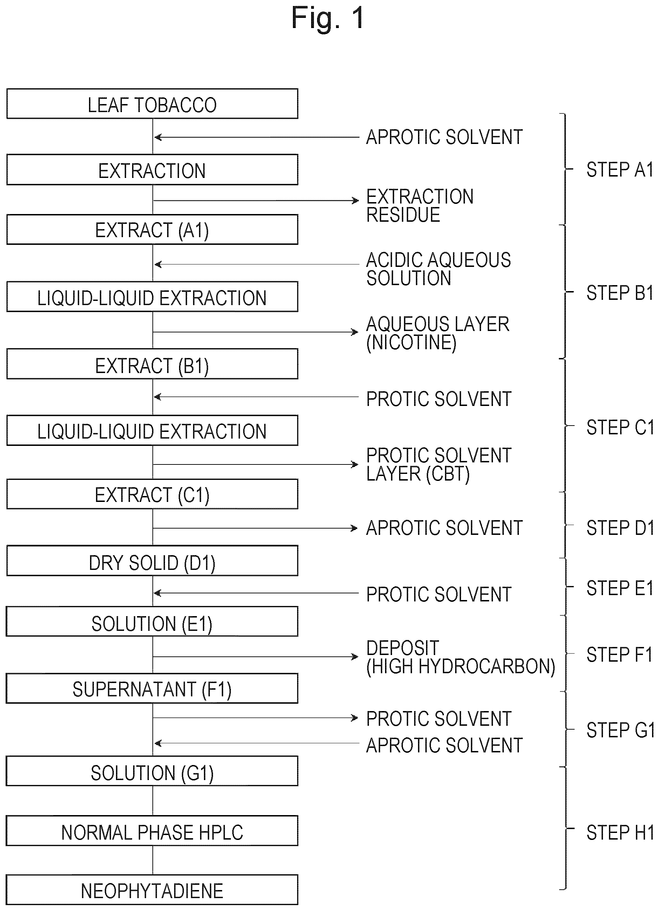

The method according to the present embodiment includes the steps A1 to H1, so it is possible to perform isolated purification of neophytadiene from leaf tobacco with high yield and high purity. Ordinarily, it is not possible to completely separate neophytadiene and nicotine through normal phase high performance liquid chromatography, so it is difficult to perform isolated purification of neophytadiene with high yield and high purity. However, with the method according to the present embodiment, particularly, by initially performing step B1 on an extract obtained from leaf tobacco in step A1 to add an acidic aqueous solution and then remove an aqueous layer, alkaloids including nicotine as a main component and contained in the extract are separated. Thus, nicotine and the like are initially removed, so it is possible to efficiently improve the yield and purity of neophytadiene subjected to isolated purification. Furthermore, after a dry solid (D1) is obtained by intentionally removing a solvent of an extract (C1) in step D1, the dry solid (D1) is dissolved again by adding a protic solvent in step E1, and a deposit (high hydrocarbon) produced in a solution (E1) obtained is removed in step F1, with the result that the high hydrocarbon can be efficiently separated. Thus, it is possible to further efficiently improve the yield and purity of neophytadiene subjected to isolated purification. Hereinafter, the details of steps A1 to H1 will be described; however, the method according to the present embodiment may include another step other than steps A1 to H1. Fig. 1 shows a flowchart of an example of the method according to the present embodiment.

### (Step A1)

In this step, an extract (A1) is obtained by adding an aprotic solvent to leaf tobacco to perform extraction operation and then removing an extraction residue. With this step, it is possible to extract an effective component including neophytadiene contained in leaf tobacco, into an extract (A1).

The type of leaf tobacco is not limited. Examples of the type of leaf tobacco include a flue cured type, a burley type, an orient type, a local type, other nicotiana-tabacum species, and nicotiana-rustica species. One of these types of leaf tobacco may be used or two or more of these types of leaf tobacco may be used in combination. Among these, from the viewpoint that a large amount of neophytadiene is contained, leaf tobacco of at least one type selected from the group consisting of a flue cured type and a burley type is preferable, and a flue cured type is more preferable. A form of leaf tobacco is not limited. From the viewpoint of improving extracting efficiency, finely powdered leaf tobacco is preferable. A solid ejected as waste from a step of expanding leaf tobacco or leaf tobacco fine powder ejected from a leaf tobacco raw material factory may be used as leaf tobacco.

From the viewpoint that it is possible to further selectively extract neophytadiene, an aprotic solvent that is an extractant is preferably a solvent of at least one selected from the group consisting of hexane, heptane, and ethyl acetate, and more preferably hexane. As for an additive amount of the aprotic solvent, the aprotic solvent preferably ranges from 500 parts by mass to 2000 parts by mass and more preferably ranges from 750 parts by mass to 1250 parts by mass with respect to 100 parts by mass of leaf tobacco. Extraction operation can be performed by, for example, agitating aprotic solvent containing leaf tobacco. An extraction temperature preferably ranges from 15°C to 40°C, and an extraction time preferably ranges from one to six hours. Removal of an extraction residue can be performed by, for example, separating extract (A1) and an extraction residue from each other with a stainless steel mesh.

### (Step B1)

In this step, an extract (B1) is obtained by adding an acidic aqueous solution to the extract (A1) obtained in step A1 to perform liquid-liquid extraction and then removing an aqueous layer. With this step, alkaloids containing nicotine as a main component migrates into an aqueous layer, and a hydrophobic effective component of leaf tobacco, such as neophytadiene, remains in an organic layer, so it is possible to selectively separate and remove alkaloids containing nicotine as a main component.

In the present embodiment, the acidic aqueous solution means an aqueous solution of which the pH is less than seven. The acidic aqueous solution may be, for example, an aqueous solution containing a pH adjustor, such as sulfuric acid and hydrochloric acid. From the viewpoint that alkaloids typically nicotine is more likely to migrate into an aqueous layer, the pH of the acidic aqueous solution is preferably less than or equal to three, and more preferably ranges from one to three. In the specification, the pH of an aqueous solution is a value measured with a pH meter (for example, product name: desktop pH meter, made by HORIBA).

Depending on the pH of the acidic aqueous solution, as for an additive amount of the acidic aqueous solution, a volume ratio of extract (A1) and acidic aqueous solution (extract (A1):acidic aqueous solution) preferably ranges from 50:100 to 500:100 and more preferably ranges from 200:100 to 400:100. Liquid-liquid extraction operation can be performed by, for example, shaking a mixture. The extraction temperature preferably ranges from 15°C to 40°C. The extraction time preferably ranges from 0.5 hours to three hours. A salt, such as sodium chloride, may be added to a mixture when liquid-liquid extraction is performed. Dewatering operation in an extract (B1) may be performed by adding a desiccant, such as anhydrous sodium sulfate, to the extract (B1) obtained by separating and removing an aqueous layer.

### (Step C1)

In this step, an extract (C1) is obtained by adding a protic solvent to the extract (B1) obtained in step B1 to perform liquid-liquid extraction and then removing a layer of a protic solvent. With this step, a foliar resin component of leaf tobacco containing cembratrienediol (CBT) as a main component migrates into a layer of a protic solvent, and neophytadiene and high hydrocarbon each migrate into a layer of an aprotic solvent, so it is possible to selectively separate and remove the foliar resin component of leaf tobacco containing CBT as a main component.

From the viewpoint of making it possible to further selectively extract and remove the foliar resin component of leaf tobacco containing CBT as a main component, the protic solvent is preferably methanol. As for an additive amount of a protic solvent, a volume ratio of extract (B1) and protic solvent (extract (B1):protic solvent) preferably ranges from 100:15 to 100:100 and more preferably ranges from 100:40 to 100:60. Liquid-liquid extraction operation can be performed by, for example, shaking a mixture. The extraction temperature preferably ranges from 15°C to 40°C. The extraction time preferably ranges from three hours to eight hours. From the viewpoint of further removing the foliar resin component of leaf tobacco containing CBT as a main component, this step may be repeated twice or more.

### (Step D1)

In this step, a dry solid (D1) is obtained by removing a solvent of the extract (C1) obtained in step C1. A method of removing a solvent (aprotic solvent) of the extract (C1) is not limited. For example, a solvent may be removed from the extract (C1) under reduced pressure.

### (Step E1)

In this step, a solution (E1) is obtained by adding a protic solvent to the dry solid (D1) obtained in step D1 to dissolve the dry solid (D1). From the viewpoint that high hydrocarbon is difficult to dissolve and neophytadiene is easy to dissolve, the protic solvent is preferably methanol. As for an additive amount of the protic solvent, the protic solvent preferably ranges from 750 parts by mass to 2500 parts by mass and more preferably ranges from 1000 parts by mass to 1500 parts by mass with respect to 100 parts by mass of the dry solid (D1). A method of dissolving the dry solid (D1) into the protic solvent is not limited. For example, the dry solid (D1) can be dispersed and dissolved by applying ultrasonic waves to the solution. The dry solid (D1) does not need to be completely dissolved into the protic solvent, and at least part of the dry solid (D1) just needs to be dissolved.

### (Step F1)

In this step, a supernatant (F1) is obtained by removing a deposit produced in the solution (E1) obtained in step E1. With this step, high hydrocarbon can be selectively separated and removed as a deposit. A deposit can be produced by standing the solution (E1). Standing can be performed, for example, at 0°C to 30°C for one to 12 hours.

### (Step G1)

In this step, a solution (G1) is obtained by replacing a solvent of the supernatant (F1) obtained in step F1 with an aprotic solvent. In this step, when the solvent (protic solvent) of the supernatant (F1) can be replaced with an aprotic solvent, the method is not limited. For example, a solution (G1) can be obtained by adding an aprotic solvent to the supernatant (F1) to perform liquid-liquid extraction and then removing a layer of a protic solvent. The solution (G1) may be obtained by removing a solvent of the supernatant (F1) and then adding an aprotic solvent.

### (Step H1)

In this step, isolated purification of neophytadiene is performed from the solution (G1) obtained in step G1 through normal phase high performance liquid chromatography (normal phase HPLC). Although HPLC is not limited, for example, 1260 Infinity (product name, made by Agilent Technologies) can be used among commercially available products. In a case where the HPLC is used, for example, separation operation can be performed under the following conditions.
·Column: made by YMC, YMC-Pack SIL/S-5µm/12nm
·Mobile phase: Hex (2 min) → Hex:AcOEt (95:5) (1 min) → Hex (12 min)
·Flow rate: 7 mL/min
·Detector: diode array detector (220 nm)
·Sample injection amount: 500 µL

After separation under the conditions, a signal detected at 220 nm is cut off to a fraction collector, the cutoff fraction is collected, and the obtained sample is condensed and dried, with the result that isolated purification of neophytadiene can be performed. With the method according to the present embodiment, neophytadiene can be obtained with high yield, and a neophytadiene composition obtained through isolated purification contains 95mass% or higher of neophytadiene.

### <Second Embodiment>

A method of performing isolated purification of neophytadiene from leaf tobacco according to the present embodiment includes the following steps:
a step of obtaining an extract (A2) by adding an aprotic solvent to the leaf tobacco to perform extraction operation and then removing an extraction residue (hereinafter, also referred to as step A2);
a step of obtaining an extract (B2) by adding an acidic aqueous solution to the extract (A2) to perform liquid-liquid extraction and then removing an aqueous layer (hereinafter, also referred to as step B2);
a step of obtaining a dry solid (C2) by removing a solvent of the extract (B2) (hereinafter, also referred to as step C2);
a step of obtaining a solution (D2) by adding a protic solvent to the dry solid (C2) to dissolve the dry solid (C2) (hereinafter, also referred to as step D2);
a step of obtaining a supernatant (E2) by removing a deposit produced in the solution (D2) (hereinafter, also referred to as step E2);
a step of obtaining a solution (F2) by adding an aprotic solvent to the supernatant (E2) to perform liquid-liquid extraction and then removing a layer of a protic solvent (hereinafter, also referred to as step F2); and
a step of performing isolated purification of neophytadiene from the solution (F2) through normal phase high performance liquid chromatography (hereinafter, also referred to as step G2).

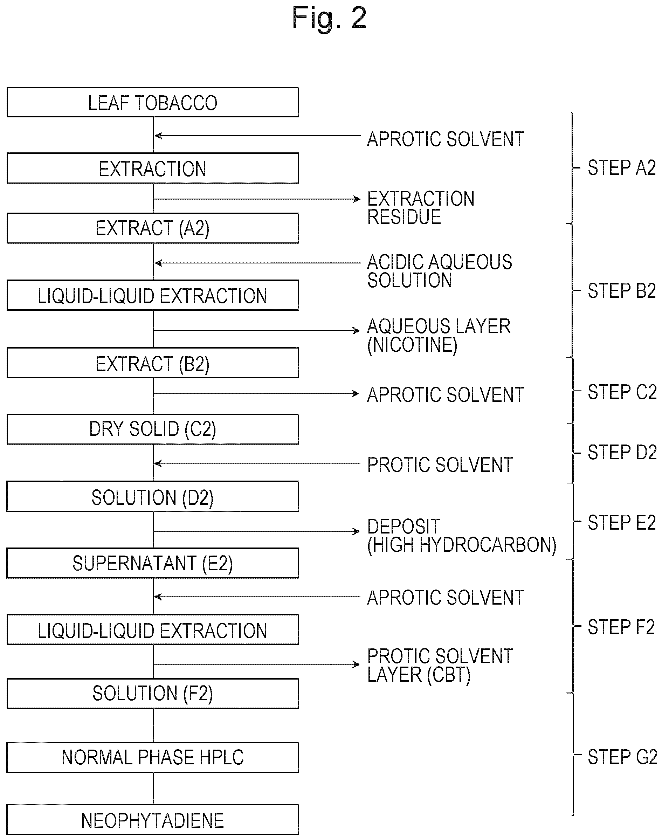

The method according to the present embodiment includes the steps A2 to G2, so it is possible to perform isolated purification of neophytadiene from leaf tobacco with high purity. With the method according to the present embodiment, particularly, by initially performing step B2 on an extract obtained from leaf tobacco in step A2 to add an acidic aqueous solution and remove an aqueous layer, alkaloids including nicotine as a main component and contained in the extract are separated. Thus, nicotine and the like are initially removed, so it is possible to efficiently improve the yield and purity of neophytadiene subjected to isolated purification. Furthermore, after a dry solid (C2) is obtained by intentionally removing a solvent of an extract (B2) in step C2, the dry solid (C2) is dissolved again by adding a protic solvent in step D2, and a deposit (high hydrocarbon) produced in a solution (D2) obtained is removed in step E2, with the result that the high hydrocarbon can be efficiently separated. Thus, it is possible to further efficiently improve the yield and purity of neophytadiene subjected to isolated purification. Hereinafter, the details of steps A2 to G2 will be described; however, the method according to the present embodiment may include another step other than steps A2 to G2. Fig. 2 shows a flowchart of an example of the method according to the present embodiment.

### (Steps A2 and B2)

Steps A2 and B2 can be performed similarly to steps A1 and B1 in the first embodiment.

### (Step C2)

In this step, a dry solid (C2) is obtained by removing a solvent of the extract (B2) obtained in step B2. A method of removing a solvent (aprotic solvent) of the extract (B2) is not limited. For example, a solvent may be removed from the extract (B2) under reduced pressure.

### (Step D2)

In this step, a solution (D2) is obtained by adding a protic solvent to the dry solid (C2) obtained in step C2 to dissolve the dry solid (C2); From the viewpoint that high hydrocarbon is difficult to dissolve and neophytadiene is easy to dissolve, the protic solvent is preferably methanol. As for an additive amount of the protic solvent, the protic solvent preferably ranges from 500 parts by mass to 2500 parts by mass and more preferably ranges from 750 parts by mass to 1500 parts by mass with respect to 100 parts by mass of the dry solid (C2). A method of dissolving the dry solid (C2) into the protic solvent is not limited. For example, the dry solid (C2) can be dispersed and dissolved by applying ultrasonic waves to the solution. The dry solid (C2) does not need to be completely dissolved into the protic solvent, and at least part of the dry solid (C2) just needs to be dissolved.

### (Step E2)

In this step, a supernatant (E2) is obtained by removing a deposit produced in the solution (D2) obtained in step D2. With this step, high hydrocarbon can be selectively separated and removed as a deposit. A deposit can be produced by standing the solution (D2). Standing can be performed, for example, at 15°C to 40°C for three to eight hours.

### (Step F2)

In this step, a solution (F2) is obtained by adding an aprotic solvent to the supernatant (E2) obtained in step E2 to perform liquid-liquid extraction and then removing a layer of a protic solvent; With this step, a foliar resin component of leaf tobacco containing cembratrienediol (CBT) as a main component migrates into a layer of a protic solvent, and neophytadiene migrates into a layer of an aprotic solvent, so it is possible to selectively separate and remove the foliar resin component of leaf tobacco containing CBT as a main component.

From the viewpoint that it is possible to further selectively extract neophytadiene, an aprotic solvent is preferably a solvent of at least one selected from the group consisting of hexane, heptane, and ethyl acetate, and more preferably hexane. As for an additive amount of an aprotic solvent, a volume ratio of supernatant (E2) and aprotic solvent (supernatant (E2):aprotic solvent) preferably ranges from 15:100 to 100:100 and more preferably ranges from 40:100 to 60: 100. Liquid-liquid extraction operation can be performed by, for example, shaking a mixture. The extraction temperature preferably ranges from 0°C to 30°C. The extraction time preferably ranges from three hours to 12 hours. From the viewpoint of further removing the foliar resin component of leaf tobacco containing CBT as a main component, this step may be repeated twice or more.

### (Step G2)

Step G2 can be performed similarly to step H1 in the first embodiment. With the method according to the present embodiment, as in the case of the first embodiment, neophytadiene can be obtained with high yield, and a neophytadiene composition obtained through isolated purification contains 95mass% or higher of neophytadiene.

### [Neophytadiene Composition]

A neophytadiene composition according to the present embodiment is obtained with the method of performing isolated purification of neophytadiene from leaf tobacco according to the above-described present embodiment and contains 95mass% or higher of neophytadiene. The neophytadiene composition preferably contains 97mass% or higher of neophytadiene and more preferably contains 99mass% or higher of neophytadiene. The content (purity) of neophytadiene in the neophytadiene composition is a value measured through GC. Components other than neophytadiene and contained in the neophytadiene composition obtained with the method according to the present embodiment are various components mainly derived from leaf tobacco, and are contained only in slight amounts, so identification is difficult.

### [Non-Combustion-Heating-Type Flavor Inhaler and Manufacturing Method Therefor]

A manufacturing method for a non-combustion-heating-type flavor inhaler according to the present embodiment includes a step of obtaining a neophytadiene composition by performing isolated purification of neophytadiene from leaf tobacco with the method according to the present embodiment, a step of adding the neophytadiene composition to a substrate, and a step of manufacturing a non-combustion-heating-type flavor inhaler including the substrate. The non-combustion-heating-type flavor inhaler according to the present embodiment includes the neophytadiene composition according to the present embodiment. The manufacturing method for a non-combustion-heating-type flavor inhaler according to the present embodiment obtains a neophytadiene composition with the method according to the present embodiment, so it is possible to efficiently perform isolated purification of neophytadiene from leaf tobacco, and it is possible to efficiently manufacture a non-combustion-heating-type flavor inhaler capable of providing a good flavor. The non-combustion-heating-type flavor inhaler according to the present embodiment includes the neophytadiene composition obtained with the method according to the present embodiment, so it is possible to provide a good flavor.

### (Substrate)

In the manufacturing method for a non-combustion-heating-type flavor inhaler according to the present embodiment, examples of the substrate to which the neophytadiene composition is added include a tobacco material. Examples of the tobacco material include a tobacco sheet, a shredded tobacco, a wrapping paper, and a polysaccharide sheet.

### (1) Tobacco Sheet

A tobacco sheet is a sheet obtained by molding a composition including aged tobacco leaves and the like. Aged tobacco leaves used for a tobacco sheet are not limited. Examples of the aged tobacco leaves include the one stripped and separated into laminae and leaf midribs. Aged tobacco leaves mean tobacco leaves subjected to treatment, such as curing, and long-term storage in a warehouse or the like. In the present embodiment, "sheet" means a material having a pair of substantially parallel principal surfaces and a side surface. A tobacco sheet may be molded with a known method, such as sheet making, casting, and rolling. Various tobacco sheets molded by such methods are disclosed in details in "Tobacco Dictionary, Tobacco Academic Studies Center, 2009.3.31". A mode in which the neophytadiene composition according to the present embodiment is added to a tobacco sheet is not limited.

For example, the neophytadiene composition according to the present embodiment may be dissolved in a solvent to prepare a solution-form flavor agent for tobacco, and the flavor agent may be atomized or impregnated in a completed tobacco sheet, or the neophytadiene composition according to the present embodiment may be added at the time of forming a tobacco sheet. For example, in sheet making, a step in which water-soluble materials are extracted from aged tobacco leaves and separated into a water extract and a residue, a mixture of fiberized residue and pulp is subjected to sheet making, and a condensate of the water extract is added to the made sheet is performed, and the neophytadiene composition according to the present embodiment can be added to the water extract. In casting, a step in which water, pulp, binder, and a ground product of aged tobacco are mixed as a mixture and the mixture is cast is performed, and the neophytadiene composition according to the present embodiment can be added to the mixture. In rolling, a step in which water, pulp, binder, and a ground product of aged tobacco are mixed as a mixture and the mixture is put into a plurality of rolling rolls to be rolled is performed, and the neophytadiene composition according to the present embodiment can be added to the mixture.

Furthermore, as described in International Publication No. 2014/104078, a ground product of aged tobacco and binder are mixed as a mixture, the mixture is sandwiched by nonwoven fabric, and the laminate is molded into a certain shape by thermal welding, with the result that a nonwoven fabric tobacco sheet can be obtained. With this method, the neophytadiene composition according to the present embodiment can be added to the mixture.

A tobacco sheet may contain an aerosol-source material. The type of the aerosol-source material is not limited. Extracted substances from various natural products or components of them may be selected according to an application. Specific examples of the aerosol-source material include polyhydric alcohols, such as glycerine, propylene glycol, sorbitol, xylitol, and erythritol, triacetin, 1,3-butanediol, and mixtures of them. The content of the aerosol-source material can be adjusted to various amounts according to a mode to be used in a tobacco product. For example, in a case where a tobacco sheet contains an aerosol-source material, the content is commonly higher than or equal to 5mass%, preferably higher than or equal to 10mass%, more preferably higher than or equal to 15mass% and is commonly lower than or equal to 50mass%, preferably lower than or equal to 40mass%, and more preferably lower than or equal to 25mass% with respect to the total mass of the tobacco sheet from the viewpoint of obtaining a good flavor.

### (2) Shredded Tobacco

Examples of shredded tobacco include the one obtained by shredding aged tobacco leaves into a predetermined size, the one obtained by shredding the tobacco sheet into a predetermined size, and a mixture of them. The size is not limited. In an example, the size may be a width of 0.5 mm to 2.0 mm and a length of 3 mm to 10 mm. Shredded tobacco with such a size is preferable in a mode to fill an object to be filled (described later). Other than the above, examples of shredded tobacco include strand-type shreds obtained by shredding processed tobacco leaves so as to have a width of 0.5 mm to 2.0 mm and a length longer than that of the above-described shredded tobacco, preferably, a length equivalent to that of a wrapping paper. The neophytadiene composition according to the present embodiment may be added to shredded tobacco or may be added to a raw material before cutting.

Shredded tobacco may contain an aerosol-source material. In a case where shredded tobacco contains an aerosol-source material, the content is commonly higher than or equal to 5mass%, preferably higher than or equal to 10mass%, more preferably higher than or equal to 15mass% and is commonly lower than or equal to 50mass%, preferably lower than or equal to 40mass%, and more preferably lower than or equal to 25mass% with respect to the total mass of the tobacco sheet from the viewpoint of producing a sufficient amount of aerosol and obtaining a good flavor.

### (3) Wrapping Paper

The neophytadiene composition according to the present embodiment can be dissolved in a solvent to prepare a solution-form flavor agent for tobacco, and the flavor agent can be, for example, atomized or impregnated in a wrapping paper, with the result that a wrapping paper containing the neophytadiene composition according to the present embodiment can be prepared. Examples of the wrapping paper include the one containing pulp as a main component. Not only a sheet is made from wood pulp, such as soft wood pulp and hard wood pulp, as pulp but also a sheet may be made by mixing non-wood pulp generally used in a wrapping paper for a tobacco article, such as flax pulp, cannabis pulp, sisal pulp, and esparto, as pulp. One type of these pulps may be used solely or multiple types may be used in combination at a selected ratio. The wrapping paper may be made up of a single sheet or may be made up of a plurality of sheets or more. A wrapping paper may be used in a mode to wrap a tobacco raw material, such as shredded tobacco, or the wrapped member may be used as a material (for example, a tipping paper) for wrapping with another member, such as a cooling member and a filter member. Chemical pulp, ground pulp, chemiground pulp, thermomechanical pulp, or the like obtained by kraft cooking, acid, neutral, alkali sulfite cooking, soda salt cooking, or the like may be used as pulp.

### (4) Polysaccharide Sheet

A polysaccharide sheet is a sheet containing polysaccharide as a main component, and the neophytadiene composition according to the present embodiment can be contained in a polysaccharide sheet. A non-combustion-heating-type flavor inhaler using a polysaccharide sheet containing the neophytadiene composition according to the present embodiment can release a good flavor. Examples of the polysaccharide include carageenan, agar, gellan gum, tamarind gum, thyrium seed gum, konjac glucomannan, carageenan, locust bean gum, guar gum, agar, xanthan gum, gellan gum, tamarind gum, tara gum, konjac glucomannan, starch, cassia gum, and thyrium seed gum

A polysaccharide sheet containing the neophytadiene composition according to the present embodiment can be used for a non-combustion-heating-type flavor inhaler, a non-combustion-non-heating-type flavor inhaler (described later), and a combustion-type flavor inhaler. In a mode of a combustion-type flavor inhaler, the polysaccharide sheet described in, for example, Japanese Patent No. 5481574 can be used. In this mode, the content of the neophytadiene composition according to the present embodiment can range from 0.01mass% to 30mass% with respect to the sheet. The polysaccharide sheet can be prepared with a method in which polysaccharide and water are mixed to prepare a polysaccharide aqueous solution and the aqueous solution is added with a flavoring agent and an emulsifier is kneaded and emulsified. A known one may be used as the emulsifier.

In a mode of a non-combustion-heating-type flavor inhaler, the polysaccharide sheet described in PCT/JP2019/20136 can be used. In this mode, agar is particularly preferably used as polysaccharide. The content of agar preferably ranges from 10mass% to 50mass% and more preferably ranges from 15mass% to 45mass% with respect to the sheet. The neophytadiene composition according to the present embodiment in the polysaccharide sheet can range from 0.01mass% to 30mass% with respect to the sheet.

In this mode, a saccharide compound selected from the group consisting of sugar and sugar alcohol is preferably used. Examples of the "sugar" include glucose, sucrose, fructose, xylose, galactose, mannose, maltose, trehalose, lactose, and raffinose. Examples of the "sugar alcohol" include sorbitol that is an alcohol obtained by reducing the carbonyl group of sugar to a hydroxyl group. The content of the compound is preferably higher than or equal to 10mass%, more preferably ranges from 10mass% to 500mass%, further preferably ranges from 10mass% to 300mass%, and furthermore preferably ranges from 10mass% to 200mass% with respect to agar. In this mode, an emulsifier is preferably used. A known one may be used as an emulsifier. The content of the emulsifier preferably ranges from 0.5mass% to 10mass% and more preferably ranges from 1.0mass% to 8.0mass% with respect to the mass of agar.

The polysaccharide sheet in this mode can be manufactured by kneading a raw material including agar, a saccharide compound, a flavoring agent, and an emulsifier in water to prepare raw material slurry, spreading the raw material slurry on a substrate, and drying the raw material.

### (Non-Combustion-Heating-Type Flavor Inhaler)

In the present embodiment, a "flavor inhaler" means an article for a user to inhale a flavor. Favor inhalers are roughly classified into "combustion-type flavor inhalers" that generate a flavor by combustion and "non-combustion-type flavor inhalers" that generate a flavor without combustion. Furthermore, non-combustion-type flavor inhalers are roughly classified into "non-combustion-heating-type flavor inhalers" that generate a flavor by heating and "non-combustion-non-heating-type flavor inhalers" that generate a flavor without heating. A combination of a device for generating an aerosol (a heating device, an atomizing device, or the like) with a non-combustion-heating-type flavor inhaler is also particularly referred to as a non-combustion-heating-type flavor inhaling system.

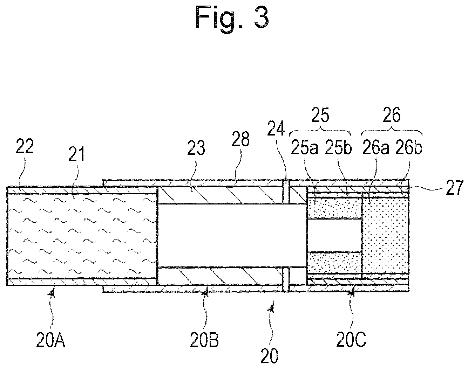

Fig. 3 shows a mode of the non-combustion-heating-type flavor inhaler according to the present embodiment. As shown in Fig. 3, a non-combustion-heating-type flavor inhaler 20 includes a tobacco rod portion 20A, a cylindrical cooling portion 20B having perforations along a circumference, and a filter part 20C. The non-combustion-heating-type flavor inhaler 20 may have a member other than these. The axial length of the non-combustion-heating-type flavor inhaler 20 is not limited and preferably ranges from 40 mm to 90 mm, more preferably ranges from 50 mm to 75 mm, and further preferably ranges from 50 mm to 60 mm. The circumferential length of the non-combustion-heating-type flavor inhaler 20 preferably ranges from 16 mm to 25 mm, more preferably ranges from 20 mm to 24 mm, and further preferably ranges from 21 mm to 23 mm. For example, a mode in which the length of the tobacco rod portion 20A is 20 mm, the length of the cooling portion 20B is 20 mm, and the length of the filter part 20C is 7 mm is applicable. The lengths of these individual members may be changed as needed according to manufacturing suitability, quality requirements, and the like. Fig. 3 shows a mode in which a first segment 25 is disposed. Alternatively, it is also applicable that the first segment 25 is not disposed and only a second segment 26 is disposed downstream of the cooling portion 20B.

### (1) Tobacco Rod Portion 20A

Shredded tobacco or tobacco sheet containing the neophytadiene composition according to the present embodiment may be used for the tobacco rod portion 20A as a tobacco filler 21. A method of filling a wrapping paper 22 with the tobacco filler 21 is not limited. For example, the tobacco filler 21 may be wrapped with the wrapping paper 22 or the cylindrical wrapping paper 22 may be filled with the tobacco filler 21. In a case where the shape of tobacco has a longitudinal direction like a rectangular shape, tobacco may be filled such that the longitudinal directions each become an indefinite direction in the wrapping paper 22 or may be filled so as to be aligned in an axial direction of the tobacco rod portion 20A or aligned in a direction orthogonal to the axial direction of the tobacco rod portion 20A. A wrapping paper containing the neophytadiene composition according to the present embodiment may be used as the wrapping paper 22. When the tobacco rod portion 20A is heated, a tobacco component, an aerosol-source material, and water, contained in the tobacco filler 21, vaporize and are supplied to inhalation.

### (2) Cooling Portion 20B

The cooling portion 20B is preferably made up of a cylindrical member. The cylindrical member may be, for example, a paper core 23 formed by working thick paper into a cylindrical shape. The cooling portion 20B may be formed of a sheet of a thin material creased, subsequently pleated, gathered, or folded in order to form channels. As such a material, a sheet material selected from the group consisting of polyethylene, polypropylene, polyvinyl chloride, polyethylene terephthalate, polylactate, cellulose acetate, and aluminum foil. The total surface area of the cooling portion 20B is prepared as needed in consideration of cooling efficiency and, for example, may range from 300 mm²/mm to 1000 mm²/mm. The cooling portion 20B preferably has perforations 24. With the presence of the perforations 24, outside air is introduced into the cooling portion 20B during inhalation. Thus, an aerosol vaporized component generated by heating the tobacco rod portion 20A contacts with outside air, and the temperature of the aerosol vaporized component decreases, so the aerosol vaporized component liquefies to form an aerosol. The diameter (span length) of each perforation 24 is not limited and may, for example, range from 0.5 mm to 1.5 mm. The number of the perforations 24 is not limited and may be one or two or more. For example, a plurality of the perforations 24 may be provided along the circumference of the cooling portion 20B.

The cooling portion 20B may have a rod shape of which the axial length, for example, ranges from 7 mm to 28 mm. For example, the axial length of the cooling portion 20B may be 18 mm. The cooling portion 20B may substantially have a circular shape as its axial sectional shape and have a diameter that ranges from 5 mm to 10 mm. For example, the diameter of the cooling portion may be about 7 mm.

### (3) Filter Part 20C

The configuration of the filter part 20C is not limited and may be made up of one or multiple filling layers. The outside of the filling layer may be wrapped with one or multiple pieces of wrapping paper. An air-flow resistance of the filter part 20C may be changed as needed by the amount, material, or the like of a filler filling the filter part 20C. When, for example, the filler is cellulose acetate fibers, it is possible to increase the air-flow resistance when the amount of cellulose acetate fibers filling the filter part 20C is increased. When the filler is cellulose acetate fibers, the packing density of cellulose acetate fibers may range from 0.13 g/cm³ to 0.18 g/cm³. The air-flow resistance is a value measured with an air-flow resistance measuring device (product name: SODIMAX made by SODIM).

The circumferential length of the filter part 20C is not limited and preferably ranges from 16 mm to 25 mm, more preferably ranges from 20 mm to 24 mm, and further preferably ranges from 21 mm to 23 mm. The axial length (horizontal direction in Fig. 3) of the filter part 20C can be selected within the range of 4 mm to 10 mm and is selected such that the air-flow resistance ranges from 15 mmH₂O/seg to 60 mmH₂O/seg. The axial length of the filter part 20C preferably ranges from 5 mm to 9 mm and more preferably ranges from 6 mm to 8 mm. The sectional shape of the filter part 20C is not limited and may be, for example, a circular shape, an elliptical shape, a polygonal shape, or the like. The filter part 20C may be directly added with a breakable capsule containing a flavoring agent, a flavor bead, or a flavoring agent.

The filter part 20C may have a center hole part as a first segment 25. The center hole part is made up of a first filling layer 25a having one or multiple hollow portions and an inner plug wrapper (inner wrapping paper) 25b covering the filling layer. The center hole part has a function to enhance the strength of the mouthpiece portion. The center hole part may be held in shape by heat molding without the inner plug wrapper 25b. The first filling layer 25a may be, for example, a rod with an inside diameter ranging from ϕ5.0 mm to ϕ1.0 mm, filled with cellulose acetate fibers with a high density and added with a plasticizer containing triacetin in the range of 6mass% to 20mass% with respect to the mass of cellulose acetate and cured. Since the first filling layer 25a has a high packing density of fibers, air and aerosol flow through only the hollow portion and almost do not flow through the first filling layer 25a during inhalation. Since the first filling layer 25a in the center hole part is a fiber filling layer, a touch feeling from outside during use is less likely to make a user feel a sense of discomfort. The filter part 20C may have a second segment 26. The second segment 26 is made up of a second filling layer 26a and an inner plug wrapper (inner wrapping paper) 26b covering the filling layer.

The first segment 25 and the second segment 26 are connected by an outer plug wrapper (outer wrapping paper) 27. The outer plug wrapper 27 may be, for example, a cylindrical paper. The tobacco rod portion 20A, the cooling portion 20B, and the connected first segment 25 and second segment 26 are connected by a mouthpiece lining paper 28. Connection of these can be made by, for example, applying a paste, such as vinyl acetate paste, on the inner surface of the mouthpiece lining paper 28 and wrapping the three members. These members may be connected separately with a plurality of pieces of lining paper multiple times.

### (Non-Combustion-Heating-Type Flavor Inhaling System)

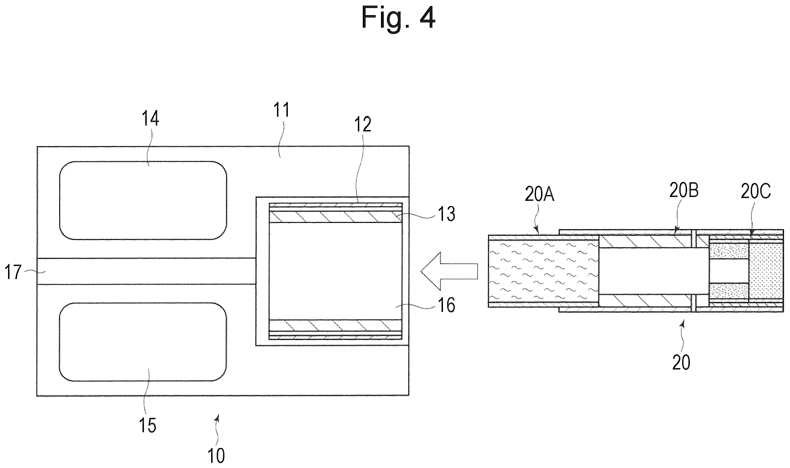

Fig. 4 is an example of the non-combustion-heating-type flavor inhaling system according to the present embodiment. In Fig. 4, the non-combustion-heating-type flavor inhaling system includes the non-combustion-heating-type flavor inhaler 20 and a heating device 10 that heats the tobacco rod portion 20A from outside.

The heating device 10 includes a body 11, a heater 12, a metal tube 13, a battery unit 14, and a control unit 15. The body 11 has a cylindrical recess 16. The heater 12 and the metal tube 13 are disposed at a location corresponding to the tobacco rod portion 20A inserted in the recess 16. The heater 13 may be an electrical resistance heater. Electric power is supplied from the battery unit 14 in response to instructions from the control unit 15 that executes temperature control, and the heater 12 performs heating. Heat emitted from the heater 12 is transferred to the tobacco rod portion 20A through the metal tube 13 having a high heat conductivity. Fig. 4 shows a mode in which the heating device 10 heats the tobacco rod portion 20A from outside. Alternatively, the heating device 10 may heats the tobacco rod portion 20A from inside. The heating temperature of the heating device 10 is not limited and is preferably lower than or equal to 400°C, more preferably ranges from 150°C to 400°C, and further preferably ranges from 200°C to 350°C. The heating temperature represents the temperature of the heater 12 of the heating device 10.

### [Non-Combustion-Non-Heating-Type Flavor Inhaler and Manufacturing Method Therefor]

A manufacturing method for a non-combustion-non-heating-type flavor inhaler according to the present embodiment includes a step of obtaining a neophytadiene composition by performing isolated purification of neophytadiene from leaf tobacco with the method according to the present embodiment, a step of adding the neophytadiene composition to a substrate, and a step of manufacturing a non-combustion-non-heating-type flavor inhaler including the substrate. The non-combustion-non-heating-type flavor inhaler according to the present embodiment includes the neophytadiene composition according to the present embodiment. The manufacturing method for a non-combustion-non-heating-type flavor inhaler according to the present embodiment obtains a neophytadiene composition with the method according to the present embodiment, so it is possible to efficiently perform isolated purification of neophytadiene from leaf tobacco, and it is possible to efficiently manufacture a non-combustion-non-heating-type flavor inhaler capable of providing a good flavor. The non-combustion-non-heating-type flavor inhaler according to the present embodiment includes the neophytadiene composition obtained with the method according to the present embodiment, so it is possible to provide a good flavor.

The method of adding the neophytadiene composition to a substrate in the manufacturing method for a non-combustion-non-heating-type flavor inhaler according to the present embodiment may be similar to the above-described manufacturing method for a non-combustion-heating-type flavor inhaler.

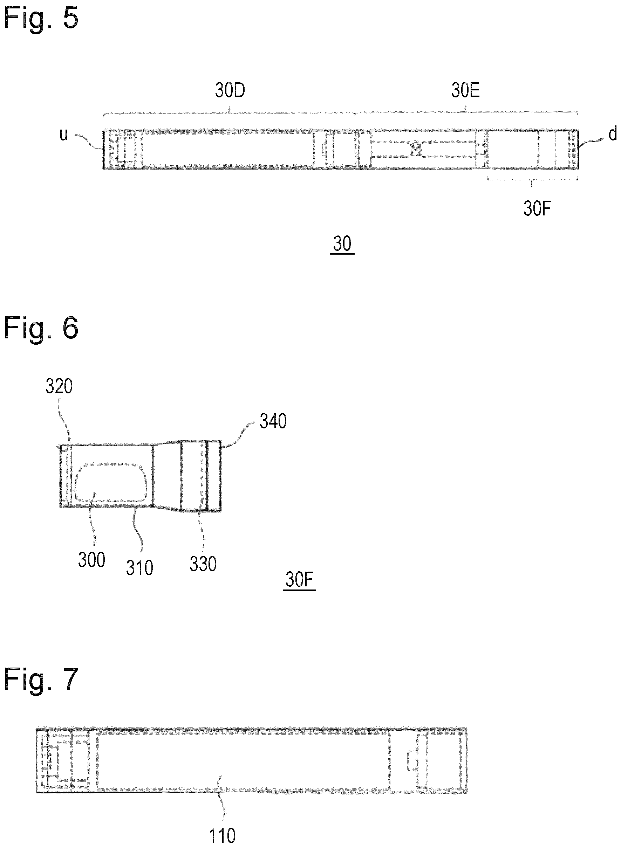

Fig. 5 shows a mode of the non-combustion-non-heating-type flavor inhaler according to the present embodiment. The non-combustion-non-heating-type flavor inhaler 30 includes a power supply unit 30D, a cartridge 30E, and a tobacco capsule 30F. The non-combustion-non-heating-type flavor inhaler 30 has such a shape extending from a non-inhalation port end u (upstream) toward an inhalation port end d (downstream). The cartridge 30E is detachable from the power supply unit 30D. The tobacco capsule 30F is detachable from the cartridge 30E.

### (1) Tobacco Capsule

Fig. 6 shows an example of the tobacco capsule 30F. As shown in Fig. 6, the tobacco capsule 30F is a tobacco rod portion and has a flavor source 300 inside. The flavor source 300 contains a tobacco material including the neophytadiene composition according to the present embodiment. The tobacco capsule 30F is connected to the cartridge 30E. Specifically, part of the tobacco capsule 30F is accommodated in the cartridge 30E.

The tobacco capsule 30F includes an accommodating body 310 that accommodates the flavor source 300, a mesh body 320, a nonwoven fabric 330, and a cap 340. An aerosol atomized by an atomizing portion 220 (described later) is introduced into the accommodating body 310 through the mesh body 320 and contacts with the flavor source 300 to impart a flavor to the aerosol. After that, the aerosol is inhaled by a user through the nonwoven fabric 330. In this way, with the non-combustion-non-heating-type flavor inhaler 30, it is possible to impart a flavor to an aerosol without heating the flavor source 300. No aerosol is substantially generated from the flavor source 300.

In a flow direction of aerosol, the length of the tobacco capsule 30F (accommodating body 310) is preferably less than or equal to 40 mm and more preferably less than or equal to 25 mm. In the flow direction of aerosol, the length is preferably greater than or equal to 1 mm and more preferably greater than or equal to 5 mm. In a direction orthogonal to the flow direction of aerosol, the maximum length of the accommodating body 310 of the tobacco capsule 30F (accommodating body 310) is preferably less than or equal to 20 mm and more preferably less than or equal to 10 mm. In the direction orthogonal to the flow direction of aerosol, the maximum length of the tobacco capsule 30F (accommodating body 310) is preferably greater than or equal to 1 mm and more preferably greater than or equal to 3 mm.

The flavor source 300 containing tobacco is made up of raw material pieces that impart a flavor to an aerosol. A lower limit of the size of the raw material pieces preferably ranges from 0.2 mm to 1.2 mm and more preferably ranges from 0.2 mm to 0.7 mm. As the size of raw material pieces that make up the flavor source 300 reduces, the specific surface area increases, so a flavor component is more easily released. Examples of the raw material pieces that make up the flavor source 300 include shredded tobacco containing the neophytadiene composition according to the present embodiment and molded bodies obtained by molding a tobacco material containing the neophytadiene composition according to the present embodiment into a granular shape. The flavor source 300 may contain a plant other than tobacco (for example, mint, herb, or the like) or a flavoring agent, such as menthol. Furthermore, the flavor source 300 containing tobacco may contain a flavor material. Examples of the flavor material include raw materials that provide sweet taste, sour taste, salty taste, umami, bitter taste, harsh taste, rich taste, pungent taste, acrid taste, astringent taste, and the like. Examples of the raw materials that provide sweet taste include saccharides, sugar alcohol, and sweeteners. Examples of the saccharides include monosaccharides, disaccharides, oligosaccharides, and polysaccharides. Examples of the sweeteners include natural sweeteners and synthetic sweeteners.

The raw material pieces are, for example, obtained by screening that conforms with JIS Z 8815 using a stainless screen that conforms with JIS Z 8801. For example, raw material pieces are screened over 20 minutes by a dry and mechanical shaking method with a stainless screen having an aperture of 0.71 mm to obtain raw material pieces passing through the stainless screen having an aperture of 0.71 mm. Subsequently, raw material pieces are screened over 20 minutes by a dry and mechanical shaking method with a stainless screen having an aperture of 0.212 mm to remove raw material pieces passing through the stainless screen having an aperture of 0.212 mm. In other words, raw material pieces that make up the flavor source 300 are raw material pieces that pass through the stainless screen (aperture = 0.71 mm) that defines an upper limit and that does not pass through the stainless screen (aperture = 0.212 mm) that defines a lower limit. Therefore, the lower limit of the size of the raw material pieces that make up the flavor source 300 is defined by the aperture of the stainless screen that defines the lower limit. The upper limit of the size of the raw material pieces that make up the flavor source 300 is defined by the aperture of the stainless screen that defines the upper limit.

The filling amount of the flavor source 300 accommodated in the accommodating body 310 is preferably greater than or equal to 300 mg and more preferably greater than or equal to 350 mg from the viewpoint of a good flavor.

### (2) Power Supply Unit

Fig. 7 shows an example of the power supply unit 30D. The power supply unit 30D has a battery 110. The battery 110 may be a disposable battery or may be a rechargeable battery. An initial value of the output voltage of the battery 110 preferably falls within the range higher than or equal to 1.2 V and lower than or equal to 4.2 V. A battery capacity of the battery 110 preferably falls within the range greater than or equal to 100 mAh and less than or equal to 1000 mAh.

### (3) Cartridge

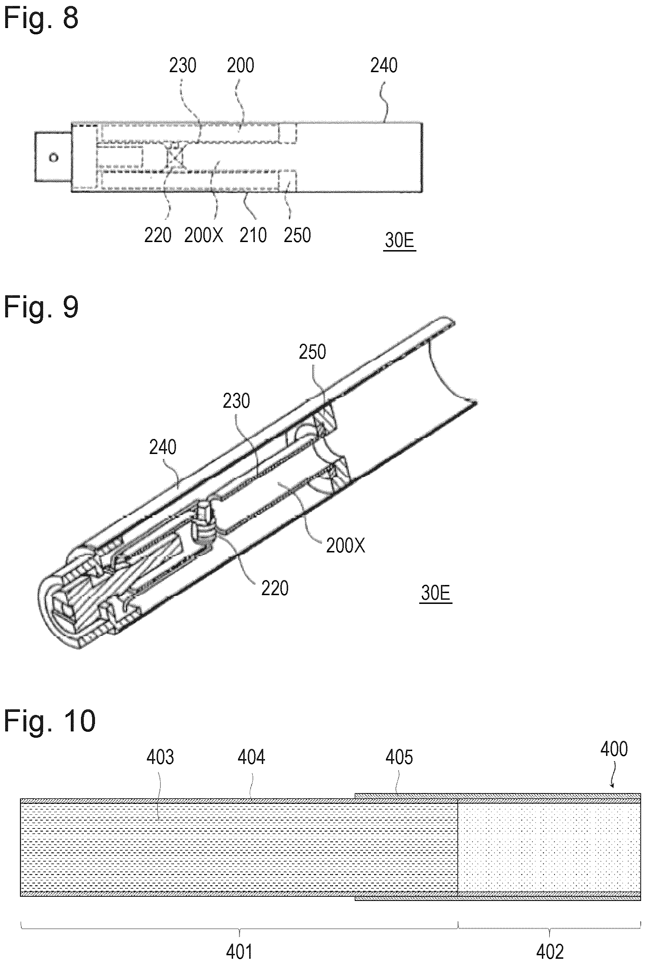

Figs. 8 and 9 show an example of the cartridge 30E. Fig. 8 is a sectional view of an example of the cartridge 30E. Fig. 9 is a view that shows the internal structure. The cartridge 30E includes a reservoir 210, the atomizing portion 220, a channel forming body 230, an outer frame body 240, and an end cap 250. The cartridge 30E has a first channel 200X disposed downstream of the atomizing portion 220 as an aerosol channel.

The reservoir 210 stores an aerosol source 200. The reservoir 210 is located around the channel forming body 230 in a cross section orthogonal to the flow direction of aerosol (a direction from the non-inhalation port end toward the inhalation port end (from upstream toward downstream)). The reservoir 210 is located in an air gap between the channel forming body 230 and the outer frame body 240. The reservoir 210 is made up of, for example, a porous body, such as resin web and cotton. The reservoir 210 may also be made up of a tank that accommodates liquid aerosol source 200. Examples of the aerosol source 200 include glycerine and propylene glycol.

The atomizing portion 220 atomizes the aerosol source 200 by using electric power supplied from the battery 110 without involving combustion. The atomizing portion 220 is made up of electrically heated wire (coil) wound at a predetermined pitch. The atomizing portion 220 is preferably made up of an electrically heated wire having a resistance value in the range of 1.0 Ω to 3.0 Ω. The predetermined pitch is greater than or equal to a value at which parts of the electrically heated wire do not contact and is less the better. The predetermined pitch is preferably, for example, less than or equal to 0.40 mm. The predetermined pitch is preferably constant in order to stabilize atomization of the aerosol source 200. The predetermined pitch is a distance between the centers of adjacent parts of electrically heated wire.

The channel forming body 230 has a cylindrical shape that forms a first channel 200X extending along the flow direction of aerosol. The outer frame body 240 has a cylindrical shape that accommodates the channel forming body 230. The outer frame body 240 extends toward a downstream side beyond the end cap 250 and accommodates part of the tobacco capsule 30F. The end cap 250 is a cap that closes from a downstream side an air gap between the channel forming body 230 and the outer frame body 240. The end cap 250 suppresses leakage of the aerosol source 200 stored in the reservoir 210 to the tobacco capsule 30F side.

### [Combustion-Type Flavor Inhaler and Manufacturing Method Therefor]

A manufacturing method for a combustion-type flavor inhaler according to the present embodiment includes a step of obtaining a neophytadiene composition by performing isolated purification of neophytadiene from leaf tobacco with the method according to the present embodiment, a step of adding the neophytadiene composition to a substrate, and a step of manufacturing a combustion-type flavor inhaler including the substrate. The combustion-type flavor inhaler according to the present embodiment includes the neophytadiene composition according to the present embodiment. The manufacturing method for a combustion-type flavor inhaler according to the present embodiment obtains a neophytadiene composition with the method according to the present embodiment, so it is possible to efficiently perform isolated purification of neophytadiene from leaf tobacco, and it is possible to efficiently manufacture a combustion-type flavor inhaler capable of providing a good flavor. The combustion-type flavor inhaler according to the present embodiment includes the neophytadiene composition obtained with the method according to the present embodiment, so it is possible to provide a good flavor.

The method of adding the neophytadiene composition to a substrate in the manufacturing method for a combustion-type flavor inhaler according to the present embodiment may be similar to the above-described manufacturing method for a non-combustion-heating-type flavor inhaler.

Fig. 10 is an example of the combustion-type flavor inhaler according to the present embodiment. As shown in Fig. 10, a combustion-type flavor inhaler 400 includes a tobacco-containing segment 401 and a filter segment 402 provided adjacent to the tobacco-containing segment 401. The tobacco-containing segment 401 includes a tobacco filler 403 containing a tobacco material containing the neophytadiene composition according to the present embodiment, and a wrapping paper 404 wrapping around the tobacco filler 403. As described above, the wrapping paper 404 may contain the neophytadiene composition according to the present embodiment. The filter segment 402 is not limited as long as the filter segment 402 has a function as a general filter. For example, tow made of synthetic fiber (also simply referred to as "tow") and the one obtained by working a material, such as paper, into a cylindrical shape. The tobacco-containing segment 401 and the filter segment 402 are coupled by a tipping paper member 405 wound on the tobacco-containing segment 401 and the filter segment 402. The tipping paper member 405 may have air holes at part of the outer circumference. The number of air holes may be one or multiple. For example, 10 to 40 air holes can be formed. In a case where the number of air holes is multiple, the air holes, for example, can be disposed annularly so as to be arranged in a line at the outer peripheral part of the tipping paper member 405. The plurality of air holes may be disposed at substantially constant intervals. With the air holes, air is taken in through the air holes into the filter segment 402 during inhalation. By diluting mainstream smoke with outside air through the air holes, a product design with a desired tar value can be obtained.

When a user ignites a distal end of the tobacco-containing segment 401, puts the inhalation port end of the filter segment 402 in his or her mouth, and inhales, the user can enjoy a flavor of tobacco. The number of the filter segments 402 is not limited to one. For example, a plurality of filter segments respectively having different functions may be coupled and disposed.

### EXAMPLES

Hereinafter, specific examples of the present embodiment will be described; however, the present invention is not limited thereto.

### [Reference Example 1]

### (Study on Species of Leaf Tobacco)

Two hundred grams of flue cured-type or burley-type leaf tobacco fine powder was weighted and put into a 2500 ml sealed stainless case. Subsequently, 2000 ml of hexane (made by FUJIFILM WAKO PURE CHEMICAL CORPORATION, for use in high performance liquid chromatograph) was added, and then extraction was performed for three hours while being sealed and agitated in a 40°C warm bath. After extraction, a hexane solution and an extraction residue were separated with a stainless mesh having an aperture of 250 µm, and then about 1500 ml of hexane solution was obtained. A 0. 1mass% sulfuric acid aqueous solution was prepared in advance, the 0.1mass% sulfuric acid aqueous solution and the hexane solution obtained in advance were mixed at a solution ratio (volume ratio) of (Sulfuric acid aqueous solution):(Hexane solution) = 1:3, 200 g of salt was further added, sufficiently shaken in a separating funnel, and subjected to liquid-liquid extraction operation. At this time, components typically nicotine migrated into a lower-layer sulfuric acid aqueous solution, and hydrophobic effective components of leaf tobacco migrated into an upper-layer organic layer. After sufficient standing, the organic layer was taken out, added with 200 g of anhydrous sodium sulfate, and agitated to perform dehydrating operation in the organic layer. Insoluble matter was removed by filtration with filter paper. Furthermore, hexane was removed with a rotary evaporator (made by Nihon BUCHI K.K.) under reduced pressure, 5.16 g (yield 2.58%) of dry solid was obtained from the flue cured type, and 5.4 g (yield 2.7%) of dry solid was obtained from the burley type. Each dry solid was dissolved into a hexane solvent, and the obtained solution was subjected to GC/MS analysis under conditions shown below.

Gas chromatography with mass spectrometer (GC/MS)
Instrument: 7890A/5975C GC/MSD, made by Agilent Technologies

### <GC Conditions>

Column: HP-5MS (made by Agilent Technologies)
Inside diameter 0.25 mm × Length 30 m, Film thickness 0.25 µm
Injection amount: 1 µl
Injection mode: split (10:1)
Injection port temperature: 270°C
Septum purge flow rate: 5 ml/min
Carrier gas: Helium (He)
Column flow rate: 1 ml/min (constant flow rate mode)
Oven temperature: 40°C (3 minutes) - 4°C /min - 280°C (20 minutes)
Transfer line temperature: 280°C

### <MS Conditions>

Solvent waiting time: 4 minutes
Ionization method: electron ionization mass spectrometry (EI method), 70 eV
Ion source temperature: 230°C
Quadrupole temperature: 150°C
Measurement mode: scan
MS scan range: m/z 26 to 450
Threshold: 50
Sampling rate: 2

It was learned from a total ion chromatogram obtained by analysis through the GC/MS that, when single ions (m/z = 68) contained in an MS pattern of neophytadiene were extracted and peak area values of the single ions were compared, the neophytadiene peak area value of the flue cured type was about 1.4 times as large as that of the burley type. Thus, it was found that both a flue cured type and a burley type were useful as leaf tobacco and a flue cured type was more preferable from the viewpoint that the neophytadiene yield was high.

### [Reference Example 2]

### (Study on Extractant)

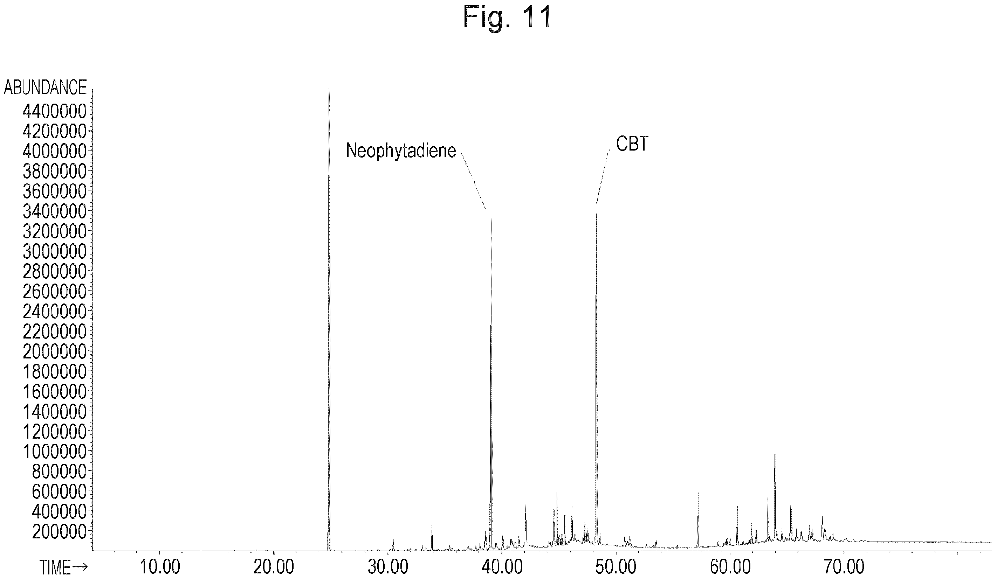

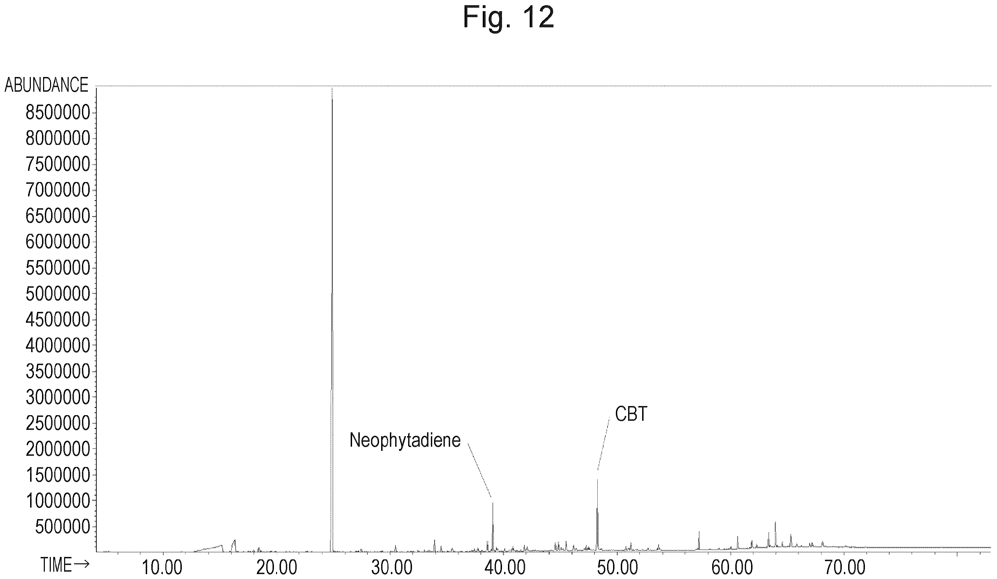

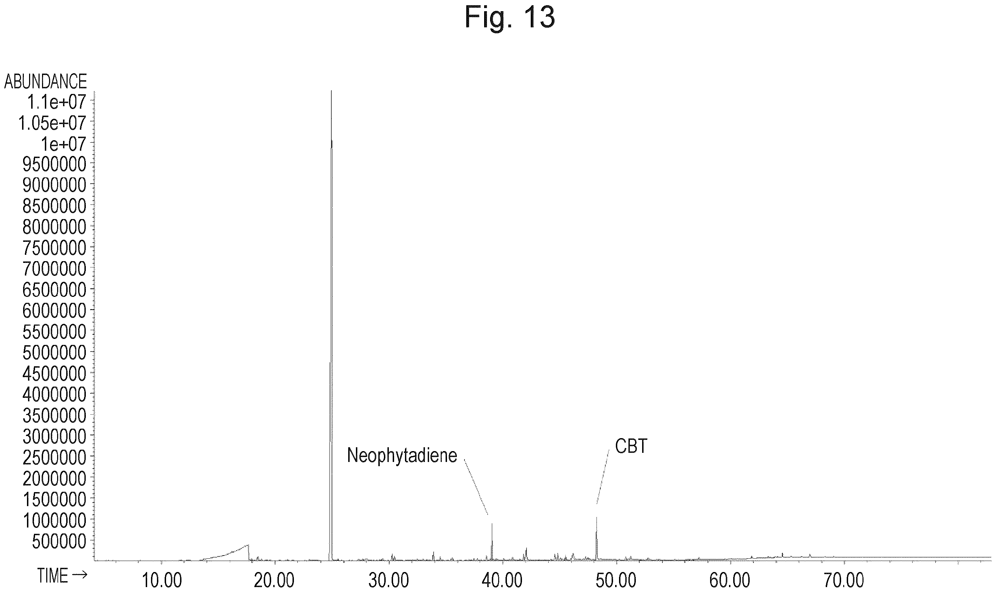

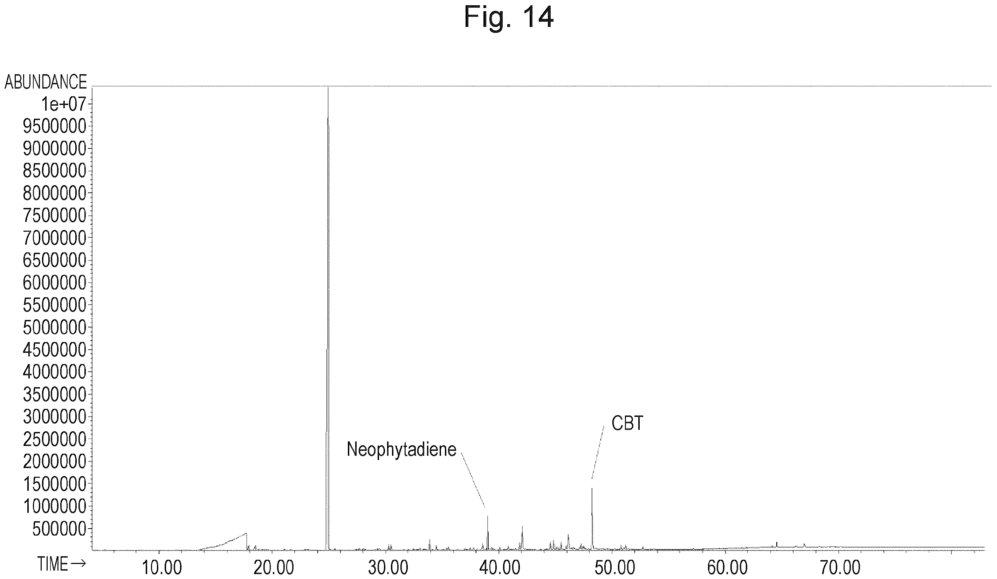

Five grams of leaf tobacco fine powder was weighed and put into a screw tube of a 100 ml case, 50 ml of an organic solvent (n-hexane, ethyl acetate, ethanol, or methanol) was added and mixed enough, and then left standing a whole day and night at normal temperature. A small amount of anhydrous sodium sulfate was added to an extract obtained by filtrating the mixture with filter paper and dehydrated, and then filtration with filter paper was performed again to remove an organic solvent under reduced pressure. A dry solid was dissolved into the solvent same as the solvent used in extraction such that the concentration of the obtained dry solid was 4mass%, and the solution was subjected to GC/MS analysis under the conditions shown in Reference Example 1. Figs. 11 to 14 show total ion chromatograms obtained by analysis through GC/MS of n-hexane, ethyl acetate, ethanol, and methanol solutions.

It was found from the chromatograms of Figs. 11 to 14 that, in a case where extraction was performed with each solvent, neophytadiene (retention time 38.9 minutes) was extracted from leaf tobacco fine powders. Furthermore, it was learned that, in extraction using ethyl acetate, ethanol, and methanol, there were the peaks of unnecessary components (before retention time 38 minutes) in purification of neophytadiene. Thus, it was found that, among the four-type solvents, hexane not having the peaks of the unnecessary components as much as possible was further suitable as an extractant.

### [Example 1]

### (Step A1)

Two hundred grams of flue cured-type leaf tobacco fine powder was weighted and put into a 2500 ml sealed stainless case. Subsequently, 2000 ml of hexane (made by FUJIFILM WAKO PURE CHEMICAL CORPORATION, for use in high performance liquid chromatograph) was added, and then extraction was performed for three hours while being sealed and agitated in a 40°C warm bath. After extraction, a hexane solution and an extraction residue were separated with a stainless mesh having an aperture of 250 µm, and then about 1500 ml of hexane solution was obtained.

### (Step B1)

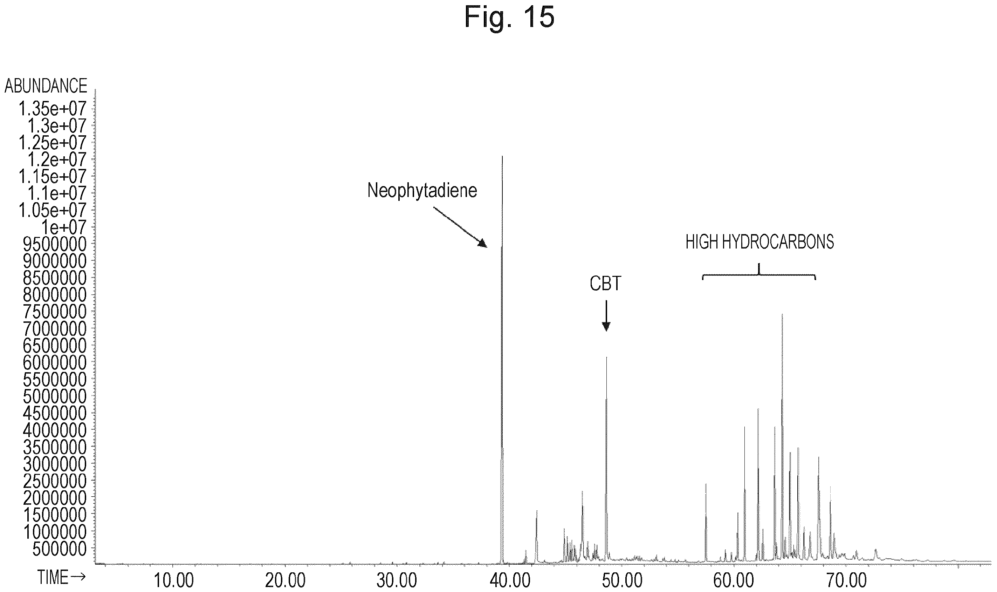

A 0.1mass% sulfuric acid aqueous solution was prepared in advance, the 0.1mass% sulfuric acid aqueous solution and the hexane solution obtained in advance were mixed at a solution ratio (volume ratio) of (Sulfuric acid aqueous solution):(Hexane solution) = 1:3, to obtain a 500 ml mixture. Furthermore, 200 g of salt was further added, sufficiently shaken in a separating funnel, and subjected to liquid-liquid extraction operation. At this time, components typically nicotine migrated into a lower-layer sulfuric acid aqueous solution, and hydrophobic effective components of leaf tobacco migrated into an upper-layer organic layer. After sufficient standing, the organic layer was taken out, added with about 200 g of anhydrous sodium sulfate, and agitated to perform dehydrating operation in the organic layer. Insoluble matter was removed by filtration with filter paper. The obtained solution was subjected to GC/MS analysis under the conditions shown in Reference Example 1. The result is shown in Fig. 15. It was learned from the chromatogram shown in Fig. 15 that alkaloids typically nicotine (retention time 24.6 minutes) could be removed by the presence of neophytadiene (retention time 38.9 minutes) and the liquid-liquid extraction operation.

### (Step C1)

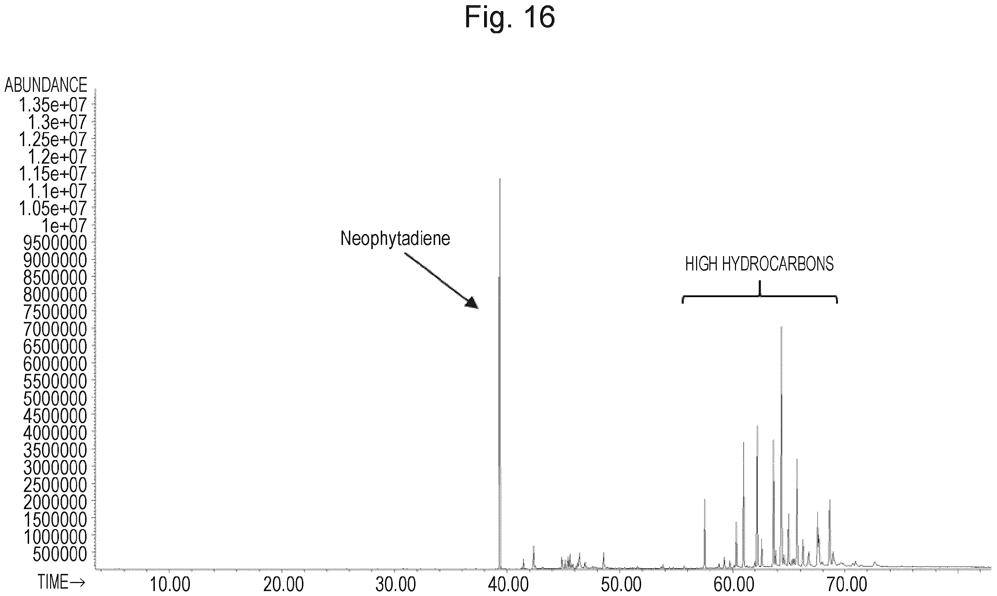

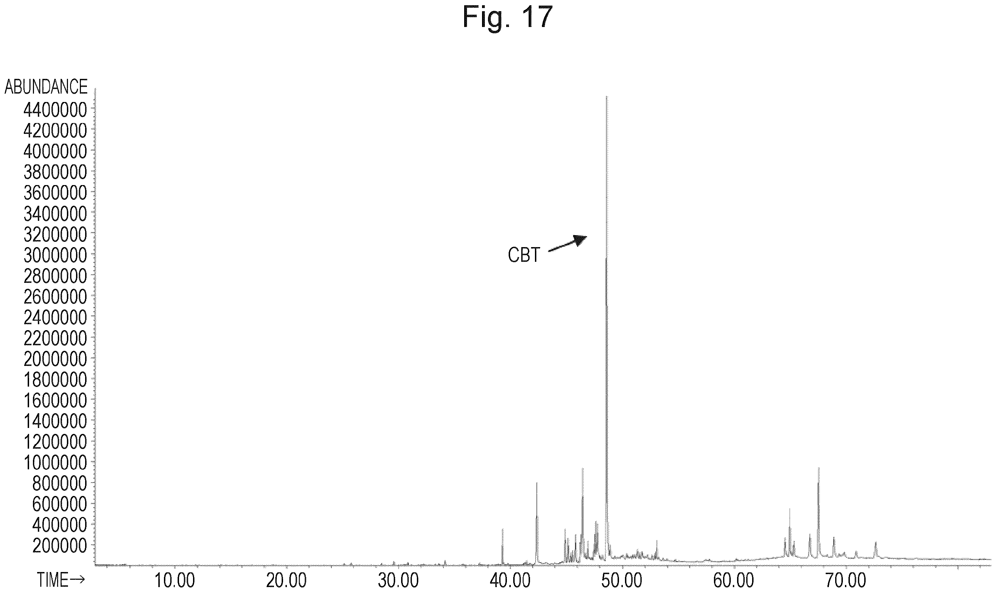

Methanol was added to the organic layer (hexane layer) obtained above such that a mixture ratio became (Organic layer):(Methanol) = 2:1 (volume ratio), mixed enough, then left standing overnight in a refrigerator (4 degrees), and subjected to liquid-liquid extraction operation. At this time, foliar resin components of tobacco, mainly, CBT, migrated into the lower-layer methanol solution, and neophytadiene and high hydrocarbons migrated into the upper-layer hexane solution. The hexane solution and methanol solution obtained through extraction operation were subjected to GC/MS analysis under the conditions shown in Reference Example 1. The result for the hexane solution is shown in Fig. 16. The result for the methanol solution is shown in Fig. 17. It was learned from the chromatograms shown in Figs. 16 and 17 that CBT was selectively removed in this step.

### (Steps D1, E1, and F1)

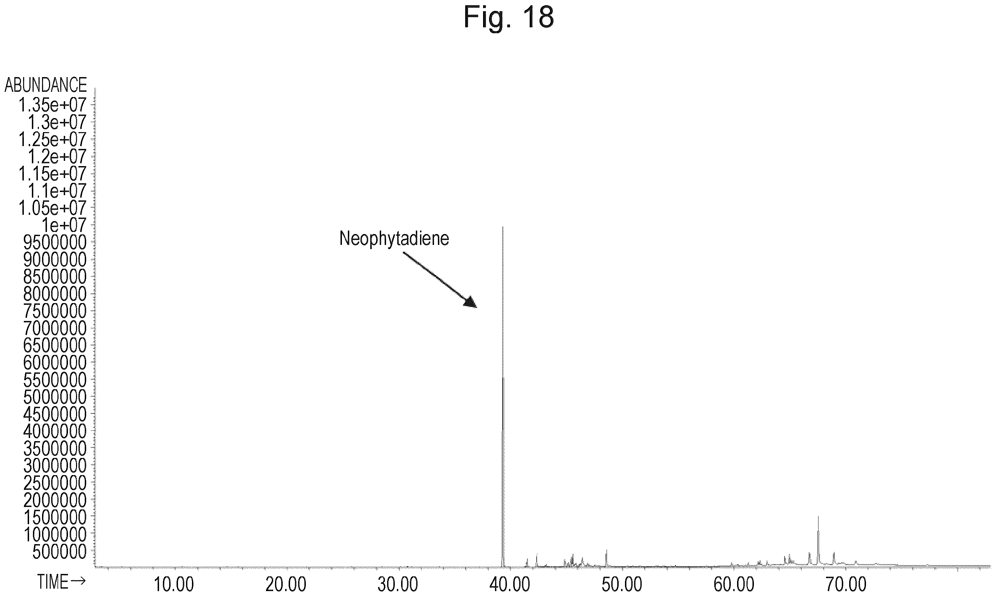

Hexane was removed from the hexane solution obtained above with a rotary evaporator (made by Nihon BUCHI K.K.) under reduced pressure, and 3.15 g of dry solid (yield 1.58%) was obtained. Three hundred milliliter of methanol was added to the dry solid, and the dry solid was dispersed and dissolved into methanol while applying ultrasonic waves. The obtained solution was left standing for an hour in a refrigerator (4°C), and then a supernatant except a deposit was collected. The supernatant was subjected to GC/MS analysis under the conditions shown in Reference Example 1. The result is shown in Fig. 18. It was learned that high hydrocarbons were selectively removed in this step.

### (Steps G1 and H1)

Methanol was removed from the supernatant obtained above with a rotary evaporator (made by Nihon BUCHI K.K.) under reduced pressure. Hexane (15 mL) was added to the obtained dry solid (1.49 g) to dissolve the dry solid. Isolated purification of neophytadiene was performed from the obtained solution with a normal phase HPLC. 1260 Infinity (product name, made by Agilent Technologies) was used as HPLC. Separation conditions of HPLC are as follows.
·Column: made by YMC, YMC-Pack SIL/S-5µm/12nm
·Mobile phase: Hex (2 min) → Hex:AcOEt (95:5) (1 min) → Hex (12 min)
·Flow rate: 7 mL/min
·Detector: diode array detector (220 nm)
·Sample injection amount: 500 µL

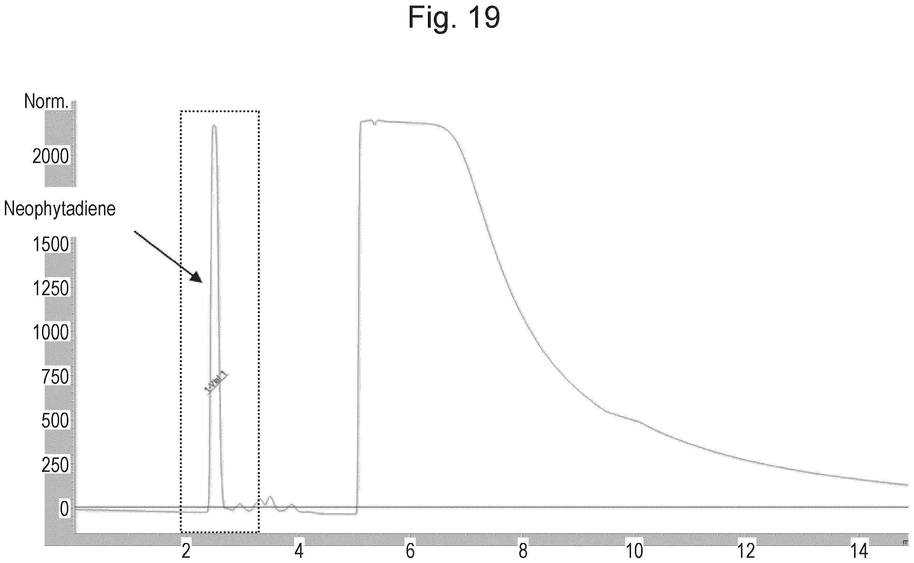

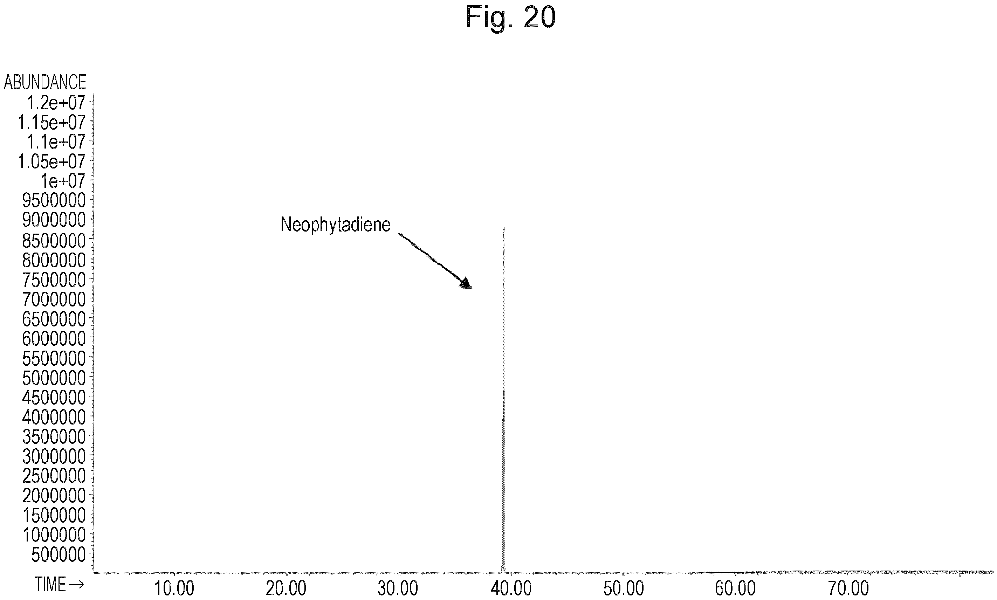

After separation under the conditions, a signal detected at 220 nm was cut off to a fraction collector. The cut-off fraction is a part shown in the dashed line in Fig. 19. The fraction was collected, the obtained sample was condensed and dried, with the result that a colorless and transparent neophytadiene composition was obtained. It was learned from a total ion chromatogram obtained by analysis through GC/MS that the yield of neophytadiene was 65.0% and isolated purification of neophytadiene could be performed from leaf tobacco. The obtained neophytadiene composition was dissolved into methanol and subjected to GC/MS analysis under the conditions shown in Reference Example 1. The result is shown in Fig. 20. When the purity is calculated, the purity of the neophytadiene composition is 99.83%, so it was learned that isolated purification of the neophytadiene composition could be performed with high purity with the method according to the present embodiment.

### [Example 2]

1000massppm of the neophytadiene composition (alcohol formulation) obtained in Example 1 was added to tobacco sheet shreds to boost flavor. The obtained flavor-boosted sheet shreds were dried, used to fill the tobacco rod portion of an external heating-type non-combustion-heating-type flavor inhaler, and evaluated. Non-flavor-boosted sheet shreds were also used to fill the tobacco rod portion of an external heating-type non-combustion-heating-type flavor inhaler, and evaluated. As a result, a tobacco-intrinsic important aroma was further more developed from the flavor-boosted sheet shreds than from the non-flavor-boosted sheet shreds.

### [Example 3]

500massppm of the neophytadiene composition (alcohol formulation) obtained in Example 1 was added to shredded tobacco to boost flavor. The obtained flavor-boosted shredded tobacco was dried, used to fill the tobacco-containing segment of a combustion-type flavor inhaler, and evaluated. Non-flavor-boosted shredded tobacco was also similarly used to fill the tobacco-containing segment of a combustion-type flavor inhaler, and evaluated. As a result, a tobacco-intrinsic important aroma was further more developed from the flavor-boosted shredded tobacco than from the non-flavor-boosted shredded tobacco.

### REFERENCE SIGNS LIST

- 10: heating device
- 11: body
- 12: heater
- 13: metal tube
- 14: battery unit
- 15: control unit
- 16: recess
- 17: ventilation hole
- 20: non-combustion-heating-type flavor inhaler
- 20A: tobacco rod portion
- 20B: cooling portion
- 20C: filter part
- 21: tobacco filler
- 22: wrapping paper
- 23: paper core
- 24: perforation
- 25: first segment
- 25a: first filling layer
- 25b: inner plug wrapper
- 26: second segment
- 26a: second filling layer
- 26b: inner plug wrapper
- 27: outer plug wrapper
- 28: lining paper
- 30: non-combustion-non-heating-type flavor inhaler
- 30D: power supply unit
- 30E: cartridge
- 30F: tobacco capsule
- u: non-inhalation port end
- d: inhalation port end
- 110: battery
- 200: aerosol source
- 210: reservoir
- 220: atomizing portion
- 230: channel forming body
- 240: outer frame body 240
- 250: end cap
- 200X: first channel
- 300: flavor source
- 310: accommodating body
- 320: mesh body
- 330: nonwoven fabric
- 340: cap
- 400: combustion-type flavor inhaler
- 401: tobacco-containing segment
- 402: filter segment
- 403: tobacco filler
- 404: wrapping paper
- 405: tipping paper member

## Claims

1. A method of performing isolated purification of neophytadiene from leaf tobacco, the method comprising:
a step of obtaining an extract (A1) by adding an aprotic solvent to the leaf tobacco to perform extraction operation and then removing an extraction residue;
a step of obtaining an extract (B1) by adding an acidic aqueous solution to the extract (A1) to perform liquid-liquid extraction and then removing an aqueous layer;
a step of obtaining an extract (C1) by adding a protic solvent to the extract (B1) to perform liquid-liquid extraction and then removing a layer of a protic solvent;
a step of obtaining a dry solid (D1) by removing a solvent of the extract (C1);
a step of obtaining a solution (E1) by adding a protic solvent to the dry solid (D1) to dissolve the dry solid (D1);
a step of obtaining a supernatant (F1) by removing a deposit produced in the solution (E1);
a step of obtaining a solution (G1) by replacing a solvent of the supernatant (F1) with an aprotic solvent; and
a step of performing isolated purification of neophytadiene from the solution (G1) through normal phase high performance liquid chromatography.

2. A method of performing isolated purification of neophytadiene from leaf tobacco, the method comprising:
a step of obtaining an extract (A2) by adding an aprotic solvent to the leaf tobacco to perform extraction operation and then removing an extraction residue;
a step of obtaining an extract (B2) by adding an acidic aqueous solution to the extract (A2) to perform liquid-liquid extraction and then removing an aqueous layer;
a step of obtaining a dry solid (C2) by removing a solvent of the extract (B2);
a step of obtaining a solution (D2) by adding a protic solvent to the dry solid (C2) to dissolve the dry solid (C2);
a step of obtaining a supernatant (E2) by removing a deposit produced in the solution (D2);
a step of obtaining a solution (F2) by adding an aprotic solvent to the supernatant (E2) to perform liquid-liquid extraction and then removing a layer of a protic solvent; and
a step of performing isolated purification of neophytadiene from the solution (F2) through normal phase high performance liquid chromatography.

3. The method according to claim 1 or 2, wherein pH of the acidic aqueous solution is less than or equal to three.

4. The method according to any one of claims 1 to 3, wherein the aprotic solvent is at least one solvent selected from the group consisting of hexane, heptane, and ethyl acetate.

5. The method according to any one of claims 1 to 4, wherein the protic solvent is methanol.

6. The method according to any one of claims 1 to 5, wherein the leaf tobacco is at least one of a flue cured type and a burley type.

7. The method according to claim 1, wherein the step of obtaining the solution (G1) is a step of obtaining the solution (G1) by adding an aprotic solvent to the supernatant (F1) to perform liquid-liquid extraction and then removing a layer of a protic solvent.

8. The method according to claim 1, wherein the step of obtaining the solution (G1) is a step of, after a solvent of the supernatant (F1) is removed, obtaining the solution (G1) by adding an aprotic solvent.

9. The method according to any one of claims 1 to 8, wherein a neophytadiene composition obtained through the isolated purification contains 95mass% or higher of neophytadiene.

10. A manufacturing method for a non-combustion-heating-type flavor inhaler, the manufacturing method comprising:
a step of obtaining a neophytadiene composition by performing isolated purification of neophytadiene from leaf tobacco with the method according to any one of claims 1 to 9;
a step of adding the neophytadiene composition to a substrate; and
a step of manufacturing a non-combustion-heating-type flavor inhaler including the substrate.

11. A manufacturing method for a non-combustion-non-heating-type flavor inhaler, the manufacturing method comprising:
a step of obtaining a neophytadiene composition by performing isolated purification of neophytadiene from leaf tobacco with the method according to any one of claims 1 to 9;
a step of adding the neophytadiene composition to a substrate; and
a step of manufacturing a non-combustion-non-heating-type flavor inhaler including the substrate.

12. A manufacturing method for a combustion-type flavor inhaler, the manufacturing method comprising:
a step of obtaining a neophytadiene composition by performing isolated purification of neophytadiene from leaf tobacco with the method according to any one of claims 1 to 9;
a step of adding the neophytadiene composition to a substrate; and
a step of manufacturing a combustion-type flavor inhaler including the substrate.

13. A neophytadiene composition containing 95mass% or higher of neophytadiene, the neophytadiene composition being obtained by performing isolated purification of neophytadiene from leaf tobacco with the method according to any one of claims 1 to 9.

14. A non-combustion-heating-type flavor inhaler comprising the neophytadiene composition according to claim 13.

15. A non-combustion-non-heating-type flavor inhaler comprising the neophytadiene composition according to claim 13.

16. A combustion-type flavor inhaler comprising the neophytadiene composition according to claim 13.
